# EUROPÄISCHE PATENTSCHRIFT

(11) **EP 1 605 801 B1**
(45) Veröffentlichungstag und Bekanntmachung des Hinweises auf die Patenterteilung: **23.08.2006**
(21) Anmeldenummer: 04701293.5
(22) Anmeldetag: 10.01.2004
(51) Int. Cl.: A47G 1/02

(54) **SPIEGEL**
MIRROR
MIROIR

(30) Priorität: 25.03.2003 DE 20304873 U
(43) Veröffentlichungstag der Anmeldung: 21.12.2005
(73) Patentinhaber: Glas Platz GmbH & Co. KG, 51674 Wiehl-Bomig (DE)
(72) Erfinder: PLATZ, Karl Otto, 51674 Wiehl-Bomig (DE)
(74) Vertreter: Dallmeyer, Georg
(86) Internationale Anmeldenummer: PCT/EP2004/000119
(87) Internationale Veröffentlichungsnummer: WO 2004/084683

(56) Entgegenhaltungen:
- EP-A- 0 999 727
- DE-A- 4 128 735
- US-A- 5 083 009

## Beschreibung

Die Erfindung betrifft einen Spiegel.

Es sind Spiegel bekannt, die auf einem transparenten Glasträger auf dessen vom Betrachter abgewandten Rückseite eine den Spiegeleffekt bewirkende Spiegelbeschichtung aufweisen.

Es ist auch bekannt, dass derartige Spiegel eine integrierte elektrische Einrichtung z.B. eine Beleuchtungseinrichtung aufweisen können.

In DE-A-4 128 735 ist ein Spiegel beschrieben, mit einer ersten, rückseitig einen Spiegelbelag 3 aufweisenden transparenten Glasscheibe 2, sowie mit einer integrierten elektrischen Einrichtung, wobei die erste Glasplatte 2 mit einer zweiten Glasplatte 4 mit Hilfe einer transparenten Klebeschicht 5, 6 in der Art einer Verbundglasscheibe verbunden ist, und wobei eine elektrische Einrichtung auf einer elektrisch leitenden Beschichtung 7 der zweiten Glasplatte 4 montiert ist.

Der Erfindung liegt die Aufgabe zugrunde, einen Spiegel der eingangs genannten Art zu schaffen, der unterschiedliche elektrische Funktionen aufweisen kann und besonders für eine Feuchtraumnutzung geeignet ist.

Zur Lösung dieser Aufgabe dienen die Merkmale des Anspruchs 1.

Die Erfindung sieht in vorteilhafter Weise vor, dass die erste Glasplatte transparente und/oder halb verspiegelte Bereiche aufweist, wobei diese erste Glasplatte mit einer zweiten Glasplatte mit Hilfe einer transparenten Klebeschicht in der Art einer Verbundglasscheibe verbunden ist. Elektrische Einrichtungen sind auf einer elektrisch leitenden Beschichtung der zweiten Glasplatte in Bereichen montiert, die den transparenten und/oder halb verspiegelten Bereichen der ersten Glasplatte gegenüberliegen. Die erste Glasplatte weist demzufolge fensterartig ausgesparte transparente oder halb verspiegelte Bereiche auf, die in Verbindung mit den elektrischen Einrichtungen bestimmte Funktionen des Spiegels ermöglichen.

Die elektrisch leitende Beschichtung ist vorzugsweise eine pyrolytisch aufgetragene Schicht. Eine derartige Schicht weist einen hohen Rauheitsgrad auf, so dass elektrische Komponenten mit elektrisch leitenden Klebern sehr fest auf der Oberfläche der elektrisch leitenden pyrolytisch aufgetragenen Beschichtung verankert werden können. Die grobe Struktur der Beschichtung ermöglicht auch die Einleitung hoher Ströme, ohne dass eine Ablösung der elektrisch leitenden Beschichtung befürchtet werden muss.

Auf dieses Weise ist es auch möglich, die elektrischen Einrichtungen mit Niederspannung zu betreiben, da höhere Ströme über die elektrisch leitende Beschichtung zuführbar sind.

Die elektrischen Einrichtungen sind vorzugsweise auf der der ersten Glasplatte zugewandten Seite der zweiten Glasplatte angeordnet.

Die elektrische Beschichtung ist im wesentlichen vollflächig auf der der ersten Glasplatte zugewandten Seite der zweiten Glasplatte angeordnet.

Die elektrische Beschichtung kann auch auf einem Teil der der ersten Glasplatte zugewandten Seite der zweiten Glasplatte eine Heizfläche bilden.

Im Randbereich zwischen der ersten und zweiten Glasplatte ist eine umlaufende Dichtung angeordnet, die bei einem Nachschleifen der Spiegelkanten die aus den beiden Glasplatten gebildete Verbundglasscheibe schützen.

Die elektrischen Einrichtungen bestehen beispielsweise aus Beleuchtungs- und/oder Schalt- und/oder Displayeinrichtungen.

Die Beleuchtungseinrichtungen können aus Leuchtdioden bestehen, während die Schalteinrichtungen aus Sensoren, insbesondere fotooptischen Sensoren, bestehen können. Die Schalteinrichtungen können dabei auch aus einer Kombination einer Leuchtdiode und einer Fotozelle gebildet sein. Eine derartige Kombination ist beispielsweise geeignet, Bewegungen vor der Spiegelfläche zu detektieren.

Bei einer besonderen Kombination von Fotozellen können die Schalteinrichtungen auch eine Steuerungsfunktion ausüben, indem die Position eines Fingers bestimmt wird, so dass die Fingerposition in der Art eines Cursors zur Steuerung eines Gerätes verwendet werden kann. Die elektrischen Signale werden auf der elektrisch leitenden Beschichtung auf als Datenleitungen oder Signalleitungen dienenden Leiterbahnen an den Rand des Spiegels übertragen, von wo sie an eine Weiterverarbeitungseinrichtung weitergeleitet werden können.

Die Displayeinrichtungen können aus einem Flachbildschirm oder einem Leuchtdiodenfeld bestehen. Bei einem Leuchtdiodenfeld können Informationen per Laufschrift übertragen werden. Auf einem Flachbildschirm können TV- oder sonstige Videosignale wiedergegeben werden.

Der aus den beiden Glasplatten und der Klebeschicht gebildete Verbundglasspiegel weist vorzugsweise eine Dicke von ca. 8 bis 15 mm, vorzugsweise ca. 10 bis 12 mm, auf. Die Klebeschicht ist dabei beispielsweise aus einer Gießharzschicht gebildet, die die elektrischen Einrichtungen auf der zweiten Glasplatte einbettet.

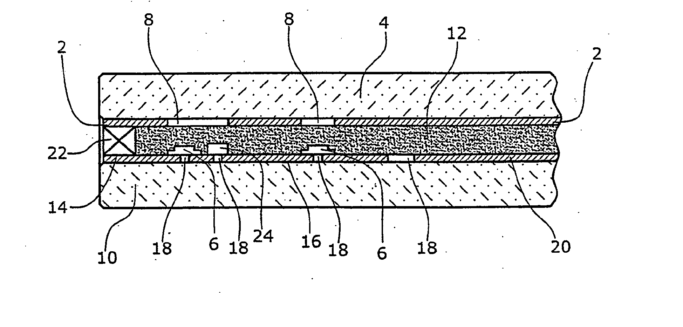

Im folgenden wird unter Bezugnahme auf die einzige Zeichnung ein Ausführungsbeispiel der Erfindung näher erläutert:

Die einzige Figur zeigt einen Spiegel 1 mit einer ersten transparenten Glasplatte 4 und einer zweiten transparenten Glasplatte 10, die mit Hilfe einer transparenten Klebeschicht 12 miteinander verbunden sind.

Die erste Glasplatte 4 ist auf der dem Betrachter abgewandten Seite mit einem Spiegelbelag 2 versehen, der aus einer den Spiegeleffekt bewirkenden Spiegelbeschichtung besteht. Der Spiegelbelag 2 ist an geeigneten Stellen ausgespart, um einen transparenten Bereich 8 zu bilden. Alternativ kann dieser Bereich 8 auch halb verspiegelt sein. Die ausgesparten Bereiche 8 können beispielsweise eine Größe von 30 x 30 mm haben.

Die zweite Glasplatte 10 ist auf der der ersten Glasplatte 4 zugewandten Seite mit einer elektrisch leitenden Beschichtung 14 versehen, die in mehrere Leiterbahnen 16 unterteilt sein kann, wobei die Leiterbahnen 16 durch Isolationsbahnen 18 voneinander getrennt sind. Am äußeren Rand des in der Art einer Verbundglasscheibe zusammengesetzten Spiegels 1 ist eine umlaufende Dichtung 22 angeordnet, die insbesondere beim Nachschleifen der Spiegelkanten eine Beschädigung des Spiegels oder der Klebesicht 12 verhindern soll. Gleichzeitig bewirkt die Dichtung 22 eine besondere Dichtigkeit gegen das Eindringen von Feuchtigkeit.

Die elektrisch leitende Beschichtung 14 ist eine pyrolytisch aufgetragene Schicht mit einer rauen Oberfläche, auf der mit elektrisch leitenden Klebern beispielsweise Leuchtdioden 6 verankert sind. Der elektrisch leitende Kleber ermöglicht eine dauerhafte elektrische Kontaktierung und fixiert gleichzeitig das Bauteil, z.B. die Leuchtdiode.

Die Leuchtdiode ist an einer Stelle der zweiten Glasplatte 10 angeordnet, die einem transparenten oder halb verspiegelten Bereich 8 gegenüberliegt, so dass die Leuchtdiode 6 als Beleuchtungsmittel dient.

Bei einem halb verspiegelten Bereich 8 ist die Leuchtdiode nach ihrem Ausschalten nicht mehr sichtbar.

In dem gezeigten Ausführungsbeispiel ist auch eine Kombination aus einer Leuchtdiode 6 und einer Fotozelle 24 gezeigt, die gemeinsam einem transparenten Bereich 8 gegenüberliegen.

Beispielsweise kann die Leuchtdiode 6 in Verbindung mit einer Fotozelle 24 eine Schalteinrichtung bilden. Es versteht sich, dass auch andere Sensoreinrichtungen auf der elektrisch leitenden Schicht 14 der zweiten Glasplatte 10 angebracht sein können.

Die elektrisch leitende Beschichtung 14 kann auch als Heizfläche 20 genutzt werden, da die elektrisch leitende Beschichtung aufgrund der Wiederstandseigenschaften bei Beaufschlagung mit einem entsprechenden Strom erhitzt werden kann. Damit ist es möglich, ein Beschlagen des Spiegels 1 zu verhindern.

Der beschriebene Spiegel kann daher einen Verbundglasspiegel mit integrierter kabelloser Beleuchtung und/oder Schalt- oder Sensoreinrichtung und/oder einer Flächenheizung bilden, wobei der Spiegel in besonderer Weise feuchtraumgeeignet ist. Auch ist die Integration des Spiegels in Duschkabinen z.B. als Seitenwand möglich.

Kabellos ist der Spiegel 1 im Hinblick auf seine innere Verschaltung der elektrischen Komponenten. Es versteht sich, dass zur Stromzufuhr oder für die Übertragung von Daten und/oder Signalen Kabel an dem Rand oder der Rückseite des Spiegels 1 angeschlossen sein können.

## Patentansprüche

1. Spiegel (1) mit einer ersten, rückseitig zumindest teilweise einen Spiegelbelag (2) aufweisenden transparenten Glasplatte (4), sowie mit mindestens einer integrierten elektrischen Einrichtung (6), wobei
- die erste Glasplatte (4) transparente und/oder halbverspiegelte Bereiche (8) aufweist,
- die erste Glasplatte (4) mit einer zweiten Glasplatte (10) mit Hilfe einer transparenten Klebeschicht (12) in der Art einer Verbundglasscheibe verbunden ist, und
- elektrische Einrichtungen (6) auf einer elektrisch leitenden Beschichtung (14) der zweiten Glasplatte (10) in Bereichen montiert sind, die den transparenten und/oder halbverspiegelten Bereichen (8) der ersten Glasplatte (4) gegenüberliegen.

2. Spiegel nach Anspruch 1, **dadurch gekennzeichnet, dass** die elektrisch leitende Beschichtung (14) eine pyrolytisch aufgetragene Schicht ist.

3. Spiegel nach Anspruch 1 oder 2, **dadurch gekennzeichnet, dass** die elektrisch leitende Beschichtung (14) in mehrere Leiterbahnen (16) unterteilt ist, die durch Isolationsbahnen (18) voneinander getrennt sind.

4. Spiegel nach Anspruch 1 bis 3, **dadurch gekennzeichnet, dass** die elektrischen Einrichtungen (6) auf der der ersten Glasplatte (4) zugewandten Seite der zweiten Glasplatte (10) angeordnet sind.

5. Spiegel nach einem der Ansprüche 1 bis 4, **dadurch gekennzeichnet, dass** die elektrische Beschichtung (14) im wesentlichen vollflächig auf der der ersten Glasplatte (4) zugewandten Seite der zweiten Glasplatte (10) angeordnet ist.

6. Spiegel nach Anspruch 1 bis 5, **dadurch gekennzeichnet, dass** die elektrische Beschichtung (14) zumindest auf einem Teil der Fläche der zweiten Glasplatte (10) eine Heizfläche (20) bildet.

7. Spiegel nach einem der Ansprüche 1 bis 6, **dadurch gekennzeichnet, dass** im Randbereich zwischen der ersten und der zweiten Glasplatte (4,10) eine umlaufende Dichtung (22) angeordnet ist.

8. Spiegel nach Anspruch 1 bis 7, **dadurch gekennzeichnet, dass** die elektrische Einrichtungen (8) aus Beleuchtungs- und/oder Schalt- und/oder Displayeinrichtungen bestehen.

9. Spiegel nach Anspruch 8, **dadurch gekennzeichnet, dass** die Beleuchtungseinrichtung aus Leuchtdioden (6) besteht.

10. Spiegel nach Anspruch 8, **dadurch gekennzeichnet, dass** die Schalteinrichtungen Sensoren, insbesondere Fotozellen (24) aufweisen.

11. Spiegel nach Anspruch 8, **dadurch gekennzeichnet, dass** die Displayeinrichtung aus mindestens einem Flachbildschirm oder aus mindestens einem Leuchtdiodenfeld besteht.

12. Spiegel nach einem der Ansprüche 1 bis 11, **dadurch gekennzeichnet, dass** der aus den beiden Glasplatten (4,10) und der Klebeschicht (12) gebildete Verbundglasspiegel eine Dicke von ca. 8 bis 15 mm, vorzugsweise ca. 10 bis 12 mm aufweist.

## Claims

1. A mirror (1) comprising a first transparent glass plate (4) at least partly provided on the rear side with a reflecting coating (2) as well as at least one integrated electrical means (6), wherein
- the first glass plate (4) comprises transparent and/or half-reflecting portions (8),
- the first glass plate (4) is bonded to a second glass plate (10) with the aid of a transparent adhesive layer (12) in the form of a laminated glass pane, and
- electrical means (6) are mounted on an electrically conducting coating (14) of the second glass plate (10) in portions opposite the transparent and/or half-reflecting portions (8) of the first glass plate (4).

2. The mirror according to claim 1, **characterized in that** the electrically conducting coating (14) is a pyrolytically applied layer.

3. The mirror according to claim 1 or 2, **characterized in that** the electrically conducting coating (14) is divided into a plurality of conductor paths (16) which are separated from each other by isolation paths (18).

4. The mirror according to claim 1 to 3, **characterized in that** the electrical means (6) are arranged on the side of the second glass plate (10) facing the first glass plate (4).

5. The mirror according to one of claims 1 to 4, **characterized in that** the electrical coating (14) is arranged essentially across the overall surface on the side of the second glass plate (10) facing the first glass plate (4).

6. The mirror according to claim 1 to 5, **characterized in that** the electrical coating (14) is configured at least on part of the surface of the second glass plate (10) as a heating surface (20).

7. The mirror according to one of claims 1 to 6, **characterized in that** in the border region between the first and the second glass plate (4,10) a circumferential seal (22) is arranged.

8. The mirror according to claim 1 to 7, **characterized in that** the electrical means (6) are composed of illumination and/or switching and/or display means.

9. The mirror according to claim 8, **characterized in that** the illumination means is composed of light-emitting diodes (6).

10. The mirror according to claim 8, **characterized in that** the switching means comprise sensors, in particular photocells (24).

11. The mirror according to claim 8, **characterized in that** the display means is composed of at least one flat screen or at least one light-emitting diode field.

12. The mirror according to one of claims 1 to 11, **characterized in that** the laminated glass mirror made up of the two glass plates (4,10) and the adhesive layer (12) has a thickness of approximately 8 to 15 mm, preferably approximately 10 to 12 mm.

## Revendications

1. Miroir (1) comportant une première plaque de verre transparente (4), comportant au dos au moins partiellement un tain (2), ainsi qu'au moins un dispositif électrique intégré (6), dans lequel :
- la première plaque de verre (4) comporte des zones transparentes et/ou semi-argentées (8),
- la première plaque de verre (4) est reliée à une deuxième plaque de verre (10) à l'aide d'une couche adhésive transparente (12) à la manière d'un pare-brise en verre feuilleté,
- des dispositifs électriques (6) sont montés sur un revêtement électriquement conducteur (14) de la deuxième plaque de verre (10) dans des régions qui sont opposées aux régions transparentes et/ou semi-argentées (8) de la première plaque de verre (4).

2. Miroir selon la revendication 1, **caractérisé en ce que** le revêtement électriquement conducteur (14) est une couche déposée par des moyens pyrolytiques.

3. Miroir selon la revendication 1 ou 2, **caractérisé en ce que** le revêtement électriquement conducteur (14) est divisé en plusieurs pistes conductrices (16), qui sont séparées l'une de l'autre par des pistes isolantes (18).

4. Miroir selon revendication 1 à 3, **caractérisé en ce que** les dispositifs électriques (6) sont disposés sur la face de la deuxième plaque de verre (10) qui est tournée vers la première plaque de verre (4).

5. Miroir selon l'une des revendications 1 à 4, **caractérisé en ce que** le revêtement électrique (14) est disposé essentiellement sur toute la face de la deuxième plaque de verre (10) tournée vers la première plaque de verre (4).

6. Miroir selon revendication 1 à 5, **caractérisé en ce que** le revêtement électrique (14) forme au moins sur une partie de la surface de la deuxième plaque de verre (10) une surface chauffante (20).

7. Miroir selon l'une des revendications 1 à 6, **caractérisé en ce qu'**une garniture d'étanchéité périphérique (22) est disposée dans la région en bordure entre les première et deuxième plaques de verre (4, 10).

8. Miroir selon revendication 1 à 7, **caractérisé en ce que** les dispositifs électriques (8) sont constitués de dispositifs d'éclairage et/ou de commutation et/ou d'affichage.

9. Miroir selon la revendication 8, **caractérisé en ce que** le dispositif d'éclairage est constitué par des diodes électroluminescentes (6).

10. Miroir selon la revendication 8, **caractérisé en ce que** les dispositifs de commutation comportent des capteurs, en particulier des cellules photoélectriques (24).

11. Miroir selon la revendication 8, **caractérisé en ce que** le dispositif d'affichage est constitué d'au moins un écran plat ou d'au moins un panneau de diodes électroluminescentes.

12. Miroir selon l'une des revendications 1 à 11, **caractérisé en ce que** le miroir en verre feuilleté, constitué des deux plaques de verre (4, 10) et de la couche adhésive (12), présente une épaisseur d'environ 8 à 15 mm, de préférence d'environ 10 à 12 mm.
